# EUROPEAN PATENT SPECIFICATION

(11) **EP 4 147 157 B1**
(45) Date of publication and mention of the grant of the patent: **07.01.2026**
(21) Application number: 20934261.7
(22) Date of filing: 06.05.2020
(51) Int. Cl.: G06V 10/82, G06V 40/16

(54) **FAST AND ACCURATE FACE DETECTION SYSTEM FOR LONG-DISTANCE DETECTION**
SCHNELLES UND GENAUES GESICHTSERKENNUNGSSYSTEM ZUR ERKENNUNG GROSSER ENTFERNUNGEN
SYSTÈME DE DÉTECTION FACIALE RAPIDE ET PRÉCISE POUR UNE DÉTECTION À LONGUE DISTANCE

(43) Date of publication of application: 15.03.2023
(73) Proprietor: HP (Chongqing) Co., Ltd, Chongqing (CN)
(72) Inventor: LU, Xi, Beijing 100027 (CN); FAN, Yongkang, Beijing 100027 (CN); XU, Hai, Beijing 100027 (CN); WANG, Tianran, Beijing 100027 (CN); SONG, Hailin, Beijing 100027 (CN); HE, Wenxue, Beijing 100027 (CN)
(74) Representative: Haseltine Lake Kempner LLP
(86) International application number: PCT/CN2020/088650
(87) International publication number: WO 2021/223073

(56) References cited:
- CN-A- 108 875 502
- CN-A- 108 875 502
- CN-A- 109 145 854
- US-A1- 2013 259 322
- US-A1- 2019 213 420
- US-A1- 2019 278 894
- ZHANG SHIFENG; ZHU XIANGYU; LEI ZHEN; SHI HAILIN; WANG XIAOBO; LI STAN Z.: "FaceBoxes: A CPU real-time face detector with high accuracy", 2017 IEEE INTERNATIONAL JOINT CONFERENCE ON BIOMETRICS (IJCB), IEEE, 1 October 2017 (2017-10-01), pages 1 - 9, XP033308591, DOI: 10.1109/BTAS.2017.8272675

## Description

### FIELD OF THE INVENTION

The present disclosure relates to face detection in video streams.

### BACKGROUND

It is common for room-based videoconferencing systems to use face detection for group framing and active talker focus. With the advent of convolution neural networks (CNNs), much effort has been spent developing CNN-based solutions for face detection. One negative of CNNss is the need for significant computational capabilities, especially as the networks get deeper. For many lower-end products, the computational capabilities are not present or are not available due to competing needs. Therefore, simpler CNNs and lower resolutions, lower than the actual camera resolutions, must be used, comprising results. The lower resolutions make face sizes smaller, especially if the person is farther from the camera, increasing the difficulty for the CNN to perform a high confidence determination. US2019278894 discloses a method including receiving probe image data associated with a biometric authentication request on a mobile device. US2019213420 discloses performing object recognition for video frames. CN108875502 discloses a human face recognition method and device.

### SUMMARY OF INVENTION

The scope of the invention is defined by the appended claims.

Preferred embodiments perform face detection with a lower resolution image and evaluate results against high and low thresholds. Results above the high threshold are accepted and results below the low threshold are discarded. Results between the two thresholds receive additional processing. Instead of face detection, head identification is used on the candidates. If the head size is above a limit, head identification is performed. If the head size is below the limit, a higher resolution version of the area is utilized for head identification. The results of the head identification are evaluated against a threshold and for results above the threshold, the original face detection results are accepted and below the threshold the original face detection results are discarded.

This two-step process improves face detection without the use of significantly more computational resources, allowing lower-end devices to provide a better overall experience.

### BRIEF DESCRIPTION OF THE DRAWINGS

Fig. 1 is a block diagram illustrating the components of a videoconferencing endpoint according to one embodiment of the present invention.
Fig. 2 is a flowchart of operations according to one embodiment of the present invention.
Fig. 3 is an illustration of a CNN for performing face detection in one embodiment according to the present invention.
Fig. 3A is an illustration of the convolution layers with rectified linear units of the CNN of Fig. 3.
Fig. 3B is an illustration of the inception layers of the CNN of Fig. 3.
Fig. 3C is an illustration of anchor densifying used with the CNN of Fig. 3.
Fig. 4 is an illustration of a CNN for performing head identification in one embodiment according to the present invention.
Fig. 5 is a picture of the results of face detection according to the flowchart of FIG. 2 and using the CNN of Fig. 3.
Fig. 6 is a picture of the results of head identification according to the flowchart of FIG. 2 and using the CNN of Fig. 4.

### DETAILED DESCRIPTION

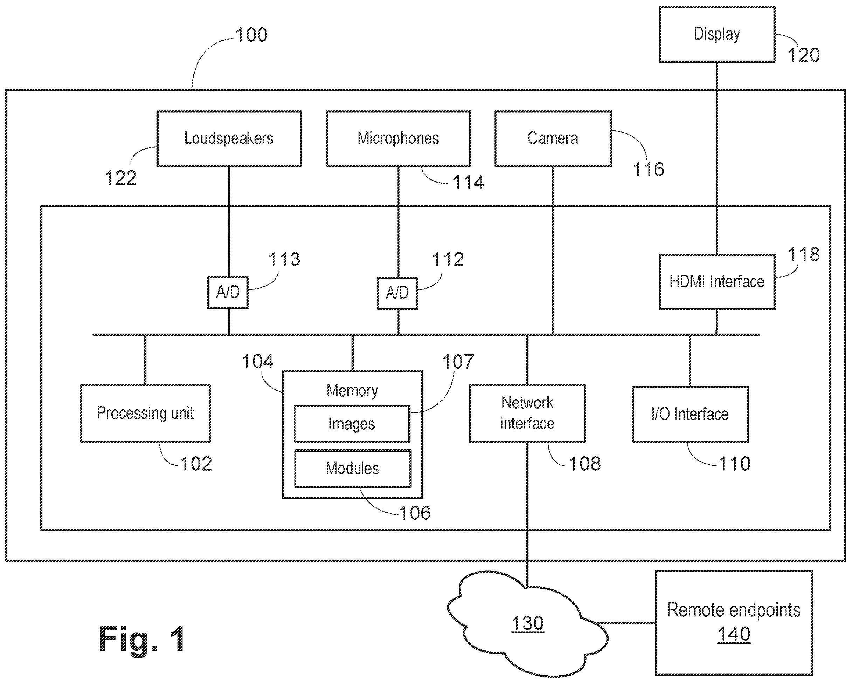

Fig. 1 is a block diagram of a videoconferencing endpoint 100 according to one embodiment. A processing unit 102, such as a DSP or central processor unit (CPU) or combination thereof, is present to perform the desired audio and video operations. The face detection and head identification techniques described below allow the processing unit 102 to be a low processing power unit. In one embodiment, the processing unit 102 is a Qualcomm Snapdragon^{®} 625 CPU. (SNAPDRAGON is a registered trademark of Qualcomm, Inc.) A memory 104, which includes a non-transitory area for storing programs or instructions to perform desired modules 106, such as a face detection module, a head identification module, a motion detection module, and audio processing modules as well as various video modules, is connected to the processing unit 102 to allow the processing unit 102 to access the modules and execute the various instructions to provide the described functions. The memory 104 further contains an image memory 107 to store images to be processed by the processing unit 102, the images stored in a transitory portion of the memory 104. Although illustrated as a bus type connection, any type of connections can be used, including point to point connections.

A network interface 108, such as an Ethernet interface, is connected to the processing unit 102 to allow communication with one or more remote endpoints 140 in the video conference. An input/output (I/O) interface 110 is connected to the processing unit 102 to perform any needed I/O operations. An A/D converter block 112 is connected to the processing unit 102 and to microphones 114. The microphones 114 include an omnidirectional microphone and a directional microphone or microphones. Similarly, at least two loudspeakers 122 are connected to the processing unit 102 via an A/D converter 113. A camera 116 is connected to the processing unit 102 and the memory 104 to provide near end video and store the video images in the image memory 107 for processing by the processing unit 102. A High-Definition Multimedia Interface (HDMI^{®}) interface or other type video interface 118 is connected to the processing unit 102 and to an external display 120 to provide video and/or audio output. (HDMI is a registered trademark of HDMI Licensing, LLC.) FIG. 1 is a very simplified diagram of a video conference system endpoint and many other designs are possible, all of which can perform the face detection and head identification operations described below.

The videoconferencing endpoint 100 communicates with the one or more remote endpoints 140 across one or more networks 130.

After capturing audio and video with the microphones 114 and camera 116, the endpoint 100 encodes it using any of the common encoding standards, such as MPEG-1, MPEG-2, MPEG-4, H.261, H.263, H.264, G729, and G711. Then, the network interface 108 outputs the encoded audio and video to the remote endpoints 140 via the network 130 using any appropriate protocol. Similarly, the network interface 108 receives conference audio and video via the network 130 from the remote endpoints 140 and sends these to codecs for processing. Eventually, the loudspeakers 122 output conference audio, and a display 120 outputs conference video. In one embodiment, the display 120 is an external display, such as a monitor display, coupled to the videoconferencing endpoint 100 via an HDMI or other wired or wireless technique. Many of these modules and other components can operate in a conventional manner well known in the art so that further details are not provided here.

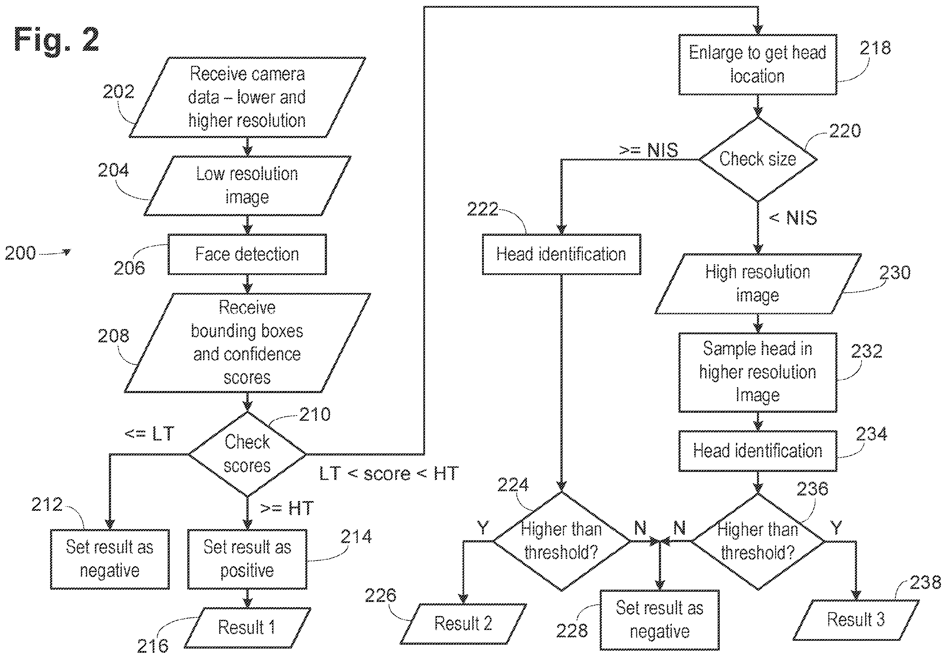

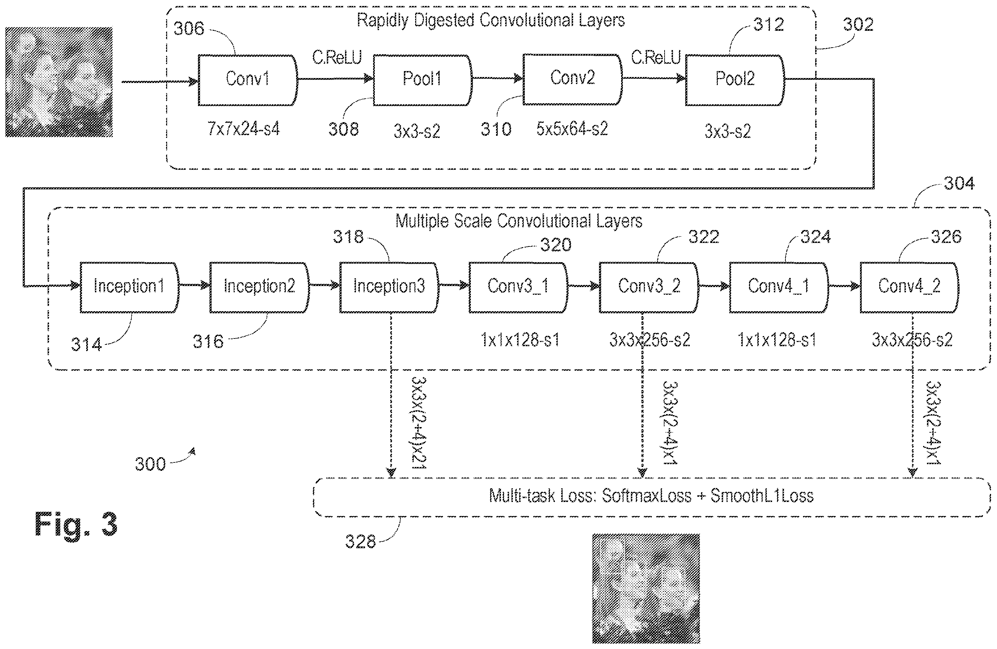

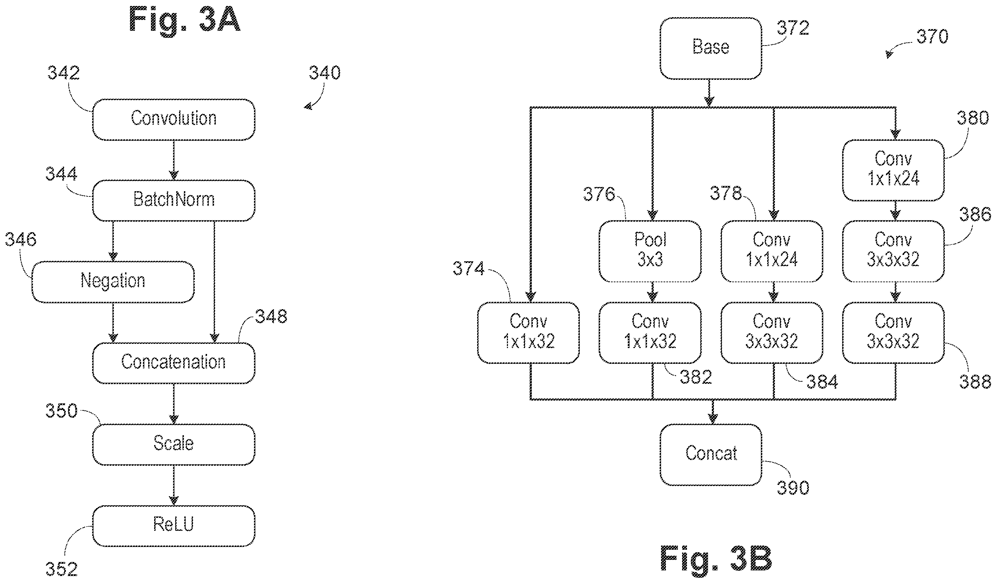

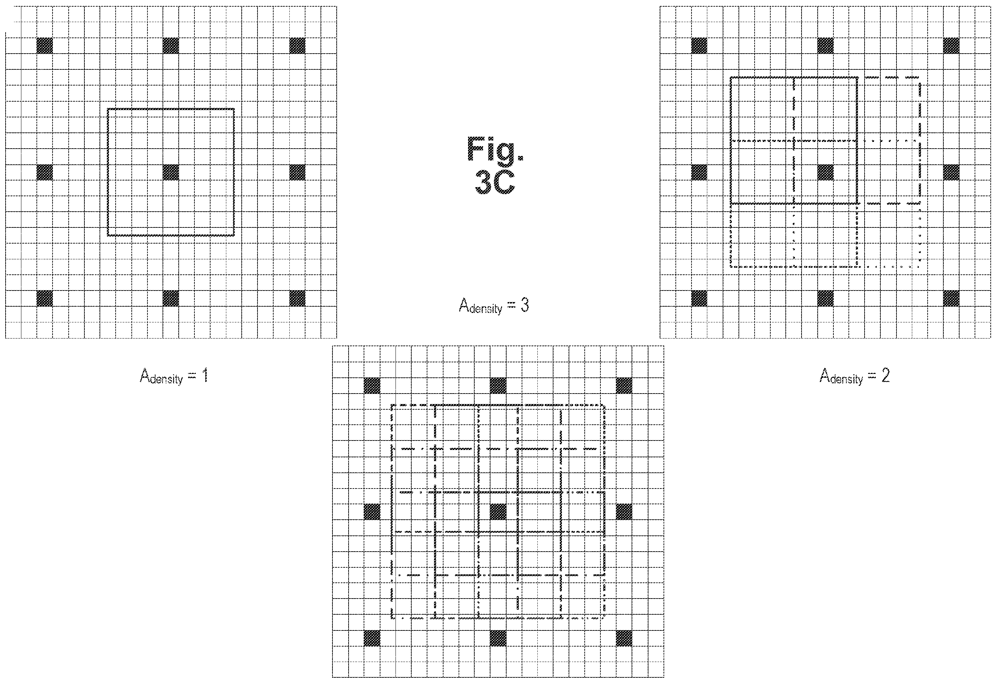

Referring to Fig. 2, the flowchart 200 illustrates face detection according to one embodiment of the present invention. In step 202, camera data is received in two resolutions, a lower resolution and a higher resolution. While the camera 116 may be a 4k camera, processing for face detection is done using lower resolutions to conserve computational bandwidth for other operations in the endpoint 100. Programs contained in the memory 104 include instructions for the processing unit 102 to downsample the video images to desired lower resolution images. In this embodiment, 720p and 1080p resolutions are used for face detection, 720p being the lower resolution and 1080p being the higher resolution. In step 204 the low-resolution video is prepared for submission to a CNN. In step 206 a CNN performs face detection. In the embodiment the CNN is face detector CNN 300 shown in Fig. 3 and described in more detail below. In step 208 the output of the face detector CNN 300 is received. The output is in the form of bounding boxes around candidate faces and confidence scores for each bounding box. In step 210, each of the confidence scores is checked. If the confidence score is below a lower face detection threshold, such as 0.4, then in step 212 that result is considered to be negative and discarded. If the confidence score is above a higher face detection threshold, such as 0.6, in step 214 the result is considered a positive and that bounding box is provided as a result in step 216.

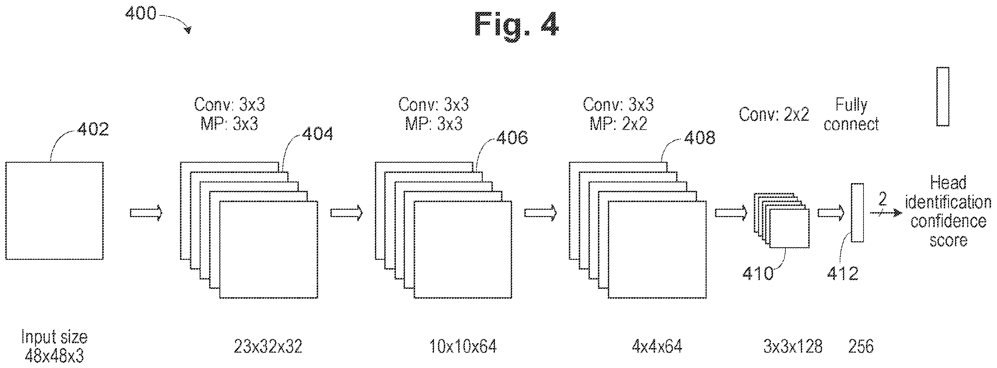

If the confidence score is between the lower and higher face detection thresholds, operations proceed to step 218 for further processing. Confidence scores in the intermediate range are usually caused by large-angle head positions, small size image and blurry face details. All of those cases are more suitable to head identification, which is then performed. In step 218 the bounding box size is increased by a factor, such as 1.2, as a head is larger than a face. In step 220 a determination is made whether the image inside the larger bounding box is greater than or equal to a given or predetermined network input size (NIS), in the embodiment, 48 x 48 pixels. The larger the image, the better, but 48 x 48 is the input size of a CNN used for head identification in the embodiment, so any larger images are cropped to 48 x 48 pixels. If larger than or equal to the NIS, in step 222 the image is provided to a head identification CNN, such as the head identifier CNN 400 shown in Fig. 4 and described in more detail below. The output of the head identifier CNN 400 is a confidence score for head identification. In step 224 the output of the head identifier CNN 400 is evaluated. If the confidence score output is above a head identification threshold, such as 0.7, in step 226 the face detection bounding box is provided as a result. If below the head identification threshold, in step 228 the result is set negative and the bounding box is discarded.

If the image size was less than NIS in step 220, in step 230 the higher resolution image is obtained. In step 232 the equivalent location to the lower resolution bounding box is determined and the relevant pixels representing the potential head in the higher resolution image are sampled and provided to the head identifier CNN 400 in step 234. In step 236 the output of the head identifier CNN 400 is evaluated. If below the head identification threshold, operation proceeds to step 228 and the bounding box is discarded. If above the head identification threshold, in step 238 the bounding box of the lower resolution image is provided as a result.

The results of the flowchart 200 are provided to video modules to direct the camera 116 as desired, such as to frame the group or a particular individual that is speaking.

In this manner, a lower resolution image is initially used to determine the presence of faces. If the results are above a higher confidence threshold, the location is accepted. If the results are below a lower confidence threshold, the location is rejected. For intermediate values, head identification is performed. If an enlarged bounding box produces an image above a desired size, head identification is performed. If not, then a higher resolution image is used to obtain the relevant region and head identification is performed. Head identification is used to provide a second review of the face detection output. As the image size becomes smaller, because the individual is farther away, the higher resolution image is used to provide the second review. Therefore, the higher resolution image is only used in certain small image conditions, conditions where prior systems would have determined no face was present, primarily due to lack of resolution.

By setting multiple thresholds and performing additional processing only in marginal cases, overall face detection is improved with only a minor additional use of computational resources. In one embodiment the face detection distance was improved from 4 meters to 7 meters and in another embodiment the face detection distance improved from 4-5 meters to 8-10 meters. This improved detection distance is obtained with a nominal increase in computational load as the additional computations are only performed in inconclusive situations and even then, higher resolution processing is limited to specific farther distance circumstances. The large improvement in face detection distance easily justifies the slight additional computational load.

Fig. 3 is an illustration of the face detector CNN 300 used in one embodiment. The architecture is from the paper by S. Zhang, X. Zhu, Z. Lei, H. Shi, X. Wang and S. Z. Li, "FaceBoxes: A CPU real-time face detector with high accuracy," 2017 IEEE International Joint Conference on Biometrics (IJCB), Denver, CO, 2017, pp. 1-9, which is hereby incorporated by reference. The paper is available through IEEE or at arxiv.org/pdf/1708.05234.pdf. Reference to the paper is suggested to provide further explanation of the face detector. The input image is provided to a Rapidly Digested Convolutional Layers (RDCL) block 302 and then to a Multiple Scale Convolutional Layers (MSCL) block 304. The RDCL block 302 has a first layer 306 that receives the image. The first layer 306 is a combination convolution and rectified linear unit (ReLU), referred to as C.ReLU module, as shown in Fig. 3A and described below. The first layer 306 is 7x7x24 and has a stride of 4. The second layer 308 is a pooling layer and is 3x3 with a stride of 2. The third layer 310 is second C.ReLU module, though this time is 5x5x64 with a stride of 2. The fourth layer 312 is a second pooling layer and is also 3x3 and a stride of 2.

The output of the fourth layer 312 is provided to a fifth layer 314, which is an inception module, as shown in Fig. 3B and described below. A sixth layer 316, a second inception module, follows the fifth layer 314. A seventh layer 318, a third inception module, follows the sixth layer 316. The seventh layer 318 is followed by an eighth layer 320, a convolutional layer that is 1x1x128 with a stride of 1. A ninth layer 322, another convolutional layer, follows the eighth layer 320. The ninth layer 322 is 3x3x256 with a stride of 2. A tenth layer 324, another 1x1x128 and stride 1 convolutional layer, follows the ninth layer 322. An eleventh layer 326, another 3x3x256 and stride 2 convolutional layer, follows the tenth layer 324.

The outputs of the seventh layer 318, the third inception module; the ninth layer 322, a convolutional layer; and the eleventh layer 326, a convolutional layer, are provided to a multi-task Loss module 328 which performs SoftmaxLoss and SmoothL1Loss functions on the three outputs. Each of the three outputs is a decreasing size from the previous output to allow detection of different size faces. As the faces may appear in different locations in the image, anchor densification, as shown in Fig. 3C and described below, is used to increase the probability of an anchor overlapping a face. The output of the multi-task Loss module 328 is the input image with bounding boxes on potential faces and a confidence score for each bounding box. These are the confidence scores evaluated in step 210.

Figure 3A illustrates a C.ReLU module 340 as used in the RDCL block 302. A first layer 342 is a convolution layer. The output of the first layer 342 is provided to a second layer 344, which is a BatchNorm layer. The output of the second layer 344 is provided to a third layer 346, a negation layer which simply multiplies -1 to the output of the second layer 344. The output of the second layer 344 and the output of the third layer 346 are provided to a fourth layer 348, a concatenation layer. The output of the fourth layer 348 is provided to a fifth layer 350, which is a scale layer. The output of the fifth layer 350 is provided to a final, sixth layer 352, which is an ReLU layer.

Figure 3B illustrates an inception module 370 as used in the MSCL block 304. A first layer 372 represents the layer before the inception module 370. In the case of Fig. 2, for the fifth layer 314, the first inception module, that layer is the fourth layer 312, the second pooling layer. The output of the first layer 372 is provided to a second layer 374, which is a convolutional layer that is 1x1x32; a third layer 376, which is a pooling layer that is 3x3; a fourth layer 378, which is a convolution layer that is 1x1x24; and to a fifth layer 380, which is a convolution layer that is 1x1x24. The output of the third layer 376 is provided to a sixth layer 382, which is a convolutional layer that is 1x1x32. The output of the fourth layer 378 is provided to a seventh layer 384, which is a convolutional layer that is 3x3x32. The output of the fifth layer 380 is provided to an eighth layer 386, which is a convolutional layer that is 3x3x32. The output of the eighth layer 386 is provided to a ninth layer 388, which is a convolutional layer that is 3x3x32. The outputs of the second layer 374, the sixth layer 382, the seventh layer 384 and the ninth layer 388 are provided to a tenth layer 390, which a concatenation layer. The tenth layer 390 provides the output of the inception module 370.

Fig. 3C illustrates anchor densification as described in the FaceBoxes paper referenced above. Reference is the paper is suggested to provide further explanation. The grid with A_{density} =1 illustrates the base case with no anchor densification. The grid with A_{density} =2 illustrates a two times densification where four replications of the anchor for density =1 are used, shown by the different line types. The grid with A_{density} =3 illustrates a three times densification where nine replications of the anchor for density =1 are used, shown by the different line types. This anchor densification addresses the problem of smaller faces, which need smaller anchors, appearing in larger images at varying locations.

The face detector CNN 300 was trained using the WIDER FACE dataset, available at shuoyang1213.me/WIDERFACE/index.html. The WIDER FACE dataset is a face detection benchmark dataset, of which images were selected from the publicly available WIDER dataset (available at yjxiong.me/event_recog/WIDER/). The WIDER FACE dataset is 32,203 images and 393,703 labeled faces with a high degree of variability in scale, pose and occlusion as depicted in the sample images. The WIDER FACE dataset is organized based on 61 event classes. For each event class, the data was randomly selected in 40%/10%/50% as training, validation and testing sets. The learning rate was 0.004 and momentum was 0.9 as the optimizer. Post-training quantization was done to improve latency.

Fig. 4 illustrates the head identifier CNN 400 used in one embodiment. The utilized O-Net architecture is from the paper by K. Zhang, Z. Zhang, Z. Li and Y. Qiao, "Joint Face Detection and Alignment Using Multitask Cascaded Convolutional Networks," in IEEE Signal Processing Letters, vol. 23, no. 10, pp. 1499-1503, Oct. 2016, which is hereby incorporated by reference. The paper is available through IEEE or at arxiv.org/ftp/arxiv/papers/1604/1604.02878.pdf. Reference to the paper is suggested to provide further explanation of the detector. An input image 402, having a size of 48x48 pixels, is provided to a first convolution/max pooling stage 404. In the first convolution/max pooling stage 404 that is 23x32x32, the convolution layer is 3x3 with a step size of 1 and the max pooling layer is 3x3 with a step size of 2. The output of the first convolution/max pooling stage 404 is provided to a second convolution/max pooling stage 406 that is 10x10x64, the convolution layer is 3x3 with a step size of 1 and the max pooling layer is 3x3 with a step size of 2. The output of the second convolution/max pooling stage 406 is provided to a third convolution/max pooling stage 408 that is 4x4x64, the convolution layer is 3x3 with a step size of 1 and the max pooling layer is 2x2 with a step size of 2. The output of the third convolution/max pooling stage 408 is provided to a 2x2 convolution layer 410 that is 3x3x128 with a step size of 1. The output of the convolution layer 410 is provided to a fully connected layer 412 with 256 nodes and a two value output vector. The two values of the output vector indicate a head identification confidence score and are used in the decision steps 224 and 236.

The head identifier CNN 400 was trained with the CrowdHuman dataset available at www.crowdhuman.org. The CrowdHuman dataset contains 15,000, 4,370 and 5,000 images for training, validation, and testing, respectively. There are a total of 470K human instances in train and validation subsets and average 23 persons per image, with various kinds of occlusions in the dataset. Each human instance is annotated with a head bounding-box, human visible-region bounding-box and human full-body bounding-box. The learning rate was 0.001 and the Adam algorithm was used as the optimizer.

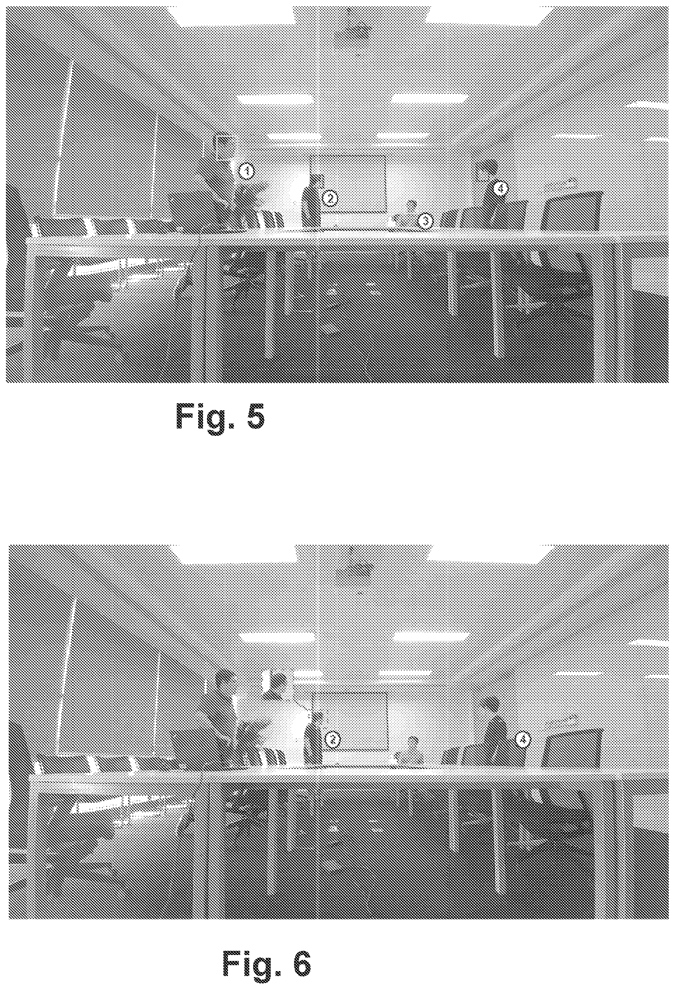

Examples of operation of one embodiment are provided in Figs. 5 and 6. In the example, the lower threshold was set to 0.4 and the higher threshold to 0.6. Processing the 720p image through the face detector CNN 300 results in four faces being marked.

Referring to Fig. 5, face ① has a confidence score 0.85, which is greater than the higher threshold and so is considered as a positive face.

Face ② has a confidence score 0.45, which is less than the higher threshold but greater than the lower threshold, so that face ② is processed through the head identifier CNN 400.

Face ③ has a confidence score 0.72, which is greater than the higher threshold, and so is considered as a positive face.

Face ④ has a confidence score 0.53, which is less than the higher threshold but greater than the lower threshold, so that face ④ is also processed through the head identifier CNN 400.

Moving to Fig. 6, the two unsure face candidates ② and ④ are passed from the face detector CNN 300. The head locations are obtained by enlarging the bounding boxes by a scale factor of 1.2. Face ② has a head size less than NIS (48x48), so the head area is sampled from the corresponding high-resolution 1080p image, resized to NIS, and then processed by the head identifier CNN 400. The score of the head identification is 0.8, which is greater than a head identification threshold of 0.7, indicating successful head identification. So, face ② is considered as a positive face.

Face④, has a head size greater than NIS, so head image is cropped according to the head bounding boxes directly from the 720p image, resized it to match NIS, and then processed by the head identifier CNN 400. The score of the head identification is 0.85, which is greater than the head identification threshold of 0.7, indicating successful head identification. So, face ④ is considered as a positive face.

It is understood that the CNNs described above, FaceBoxes and O-Net, can be replaced by other face detection and head identification networks. Furthermore, head identification can be replaced by torso/upper body identification.

While the above description has the CNNs executed on the processing unit 102, it is understood that assist neural network hardware or hardware modules can be used to improve speed of operation and offload the processing unit 102.

The use of two different thresholds, with images below the lower threshold being rejected as faces, images above the higher threshold being accepted and processing images between the lower and higher thresholds for head identification, including substituting an image from a higher resolution image if necessary, and then evaluating the head identification results, faces can reliably be detected at farther distances than if just a single threshold is used and with only nominal increases in computational capacity utilization.

While the above description is based on operations of a videoconferencing endpoint and images from the camera 116, it is understood that the operations of Fig. 2 can be performed on any images that are stored in a memory, either transitory or non-transitory, and not just on real time video images. Indeed, it is understood that the training of the CNNs is performed using images that are stored and are not real time.

The above description is illustrative and not restrictive. Many variations of the invention will become apparent to those skilled in the art upon review of this disclosure. The scope of the invention should therefore be determined not with reference to the above description, but instead with reference to the appended claims along with their full scope of equivalents.

## Claims

1. A method of face detection comprising:
receiving an image at a first resolution;
performing face detection on the image and providing face detection confidence scores of candidate faces;
evaluating the provided face detection confidence scores to a lower threshold and a higher threshold;
discarding candidate faces with a face detection confidence score below the lower threshold;
accepting candidate faces with a face detection confidence score above the higher threshold; and **characterized by**:
performing head identification on candidate faces with a face detection confidence score above the lower threshold and below the higher threshold and providing head identification confidence scores for each candidate face;
wherein when head identification is performed, the method further comprises evaluating the provided head identification confidence scores to a third threshold;
discarding candidate faces with a head identification confidence score below the third threshold; and
accepting candidate faces with a head identification confidence score above the third threshold.

2. The method of claim 1, wherein the performing the face detection further provides bounding boxes for each candidate face, the method further comprising:
enlarging the bounding boxes of each candidate face before performing head identification.

3. The method of claim 2, further comprising:
determining the size of the image in each enlarged bounding box before performing head identification;
comparing the size of the image in each enlarged bounding box with a predetermined size;
cropping the image in the enlarged bounding box to the predetermined size when the size exceeds the predetermined size; and
providing the cropped image for head identification performance.

4. The method of claim 3, further comprising:
receiving the image at a second, higher resolution;
sampling the image in the enlarged bounding box from the second, higher resolution image when the image size in the enlarged bounding box is below the predetermined size; and
providing the sampled image for head identification performance.

5. The method of claim 1, wherein the method is performed in a videoconferencing endpoint (100).

6. A non-transitory computer readable medium storing instructions that when executed by a processor cause the processor to perform a method of face detection, the method comprising:
receiving an image at a first resolution;
performing face detection on the image and providing face detection confidence scores of candidate faces;
evaluating the provided face detection confidence scores to a lower threshold and a higher threshold;
discarding candidate faces with a face detection confidence score below the lower threshold;
accepting candidate faces with a face detection confidence score above the higher threshold; and **characterized by**:
performing head identification on candidate faces with a face detection confidence score above the lower threshold and below the higher threshold and providing head identification confidence scores for each candidate face;
wherein when head identification is performed, the method further comprises evaluating the provided head identification confidence scores to a third threshold;
discarding candidate faces with a head identification confidence score below the third threshold; and
accepting candidate faces with a head identification confidence score above the third threshold.

7. A computing device comprising:
an image memory (107) for storing an image at a first resolution;
a processor coupled to the image memory (107)
a non-transitory memory (104) for storing program instructions coupled to the processor, the instructions causing the processor to perform a method of face detection, the method comprising;
performing face detection on a stored image and providing face detection confidence scores of candidate faces;
evaluating the provided face detection confidence scores to a lower threshold and a higher threshold;
discarding candidate faces with a face detection confidence score below the lower threshold;
accepting candidate faces with a face detection confidence score above the higher threshold; and **characterized by**:
performing head identification on candidate faces with a face detection confidence score above the lower threshold and below the higher threshold and providing head identification confidence scores for each candidate face;
wherein when head identification is performed, the method further comprises evaluating the provided head identification confidence scores to a third threshold;
discarding candidate faces with a head identification confidence score below the third threshold; and
accepting candidate faces with a head identification confidence score above the third threshold.

8. The computing device of claim 7, wherein the performing the face detection further provides bounding boxes for each candidate face, the method further comprising:
enlarging the bounding boxes of each candidate face before performing head identification.

9. The computing device of claim 8, the method further comprising:
determining the size of the image in each enlarged bounding box before performing head identification;
comparing the size of the image in each enlarged bounding box with a predetermined size;
cropping the image in the enlarged bounding box to the predetermined size when the size exceeds the predetermined size; and
providing the cropped image for head identification performance.

10. The computing device of claim 9, the memory (107) for storing an image at a first resolution further for storing the image at a second, higher resolution, the method further comprising:
sampling the image in the enlarged bounding box from the second, higher resolution image when the image size in the enlarged bounding box is below the predetermined size; and
providing the sampled image for head identification performance.

11. The computing device of claim 10, wherein the computing device is a videoconferencing endpoint (100), the computing device further comprising:
a camera (116) coupled to the image memory (107) for storing the image at a third resolution higher than the second, higher, resolution, and
wherein the method further comprises:
developing the images at the first and second, higher resolutions from the image stored at the third resolution and storing the first and second resolution images in the image memory (107).

12. The computing device of claim 10, wherein the computing device is a videoconferencing endpoint (100), the computing device further comprising:
a camera (116) coupled to the image memory (107) for storing the image at a third resolution higher than the first resolution, and
wherein the method further comprises:
developing the images at the first resolution from the image stored at the third resolution and storing the first resolution image in the image memory (107).

## Patentansprüche

1. Verfahren zur Gesichtserkennung, umfassend:
Empfangen eines Bildes in einer ersten Auflösung;
Durchführen von Gesichtserkennung an dem Bild und Bereitstellen von Konfidenzwerten für die Gesichtserkennung von Kandidatengesichtern;
Bewerten der bereitgestellten Konfidenzwerte für die Gesichtserkennung anhand eines unteren Schwellenwerts und eines oberen Schwellenwerts;
Verwerfen von Kandidatengesichtern mit einem Konfidenzwert für die Gesichtserkennung unterhalb des unteren Schwellenwerts;
Akzeptieren von Kandidatengesichtern mit einem Konfidenzwert für die Gesichtserkennung oberhalb des oberen Schwellenwerts; und
**gekennzeichnet durch:**
Durchführen von Kopfidentifizierung an Kandidatengesichtern mit einem Konfidenzwert für die Gesichtserkennung oberhalb des unteren Schwellenwerts und unterhalb des oberen Schwellenwerts sowie Bereitstellen von Konfidenzwerten für die Kopfidentifizierung für jedes Kandidatengesicht;
wobei das Verfahren, wenn eine Kopfidentifizierung ausgeführt wird, ferner Auswerten der bereitgestellten Konfidenzwerte für die Kopfidentifizierung anhand eines dritten Schwellenwerts;
Verwerfen von Kandidatengesichtern mit einem Konfidenzwert für die Kopfidentifizierung unterhalb des dritten Schwellenwerts und
Akzeptieren von Kandidatengesichtern mit einem Konfidenzwert für die Kopfidentifizierung oberhalb des dritten Schwellenwerts umfasst.

2. Verfahren nach Anspruch 1, wobei das Ausführen der Gesichtserkennung ferner Begrenzungsrahmen für jedes Kandidatengesicht bereitstellt, wobei das Verfahren ferner umfasst:
Vergrößern der Begrenzungsrahmen jedes Kandidatengesichts vor Ausführen der Kopfidentifizierung.

3. Verfahren nach Anspruch 2, ferner umfassend:
Bestimmen der Größe des Bildes in jedem vergrößerten Begrenzungsrahmen vor Ausführen der Kopfidentifizierung;
Vergleichen der Bildgröße in jedem vergrößerten Begrenzungsrahmen mit einer vorgegebenen Größe;
Zuschneiden des Bildes in dem vergrößerten Begrenzungsrahmen auf die vorgegebene Größe, wenn die Größe die vorgegebene Größe überschreitet; und
Bereitstellen des zugeschnittenen Bildes für die Durchführung der Kopfidentifizierung.

4. Verfahren nach Anspruch 3, ferner umfassend:
Empfangen des Bildes in einer zweiten, höheren Auflösung;
Abtasten des Bildes in dem vergrößerten Begrenzungsrahmen von dem zweiten, höher auflösenden Bild, wenn die Bildgröße in dem vergrößerten Begrenzungsrahmen unterhalb der vorgegebenen Größe liegt; und
Bereitstellen des abgetasteten Bildes für die Durchführung der Kopfidentifizierung.

5. Verfahren nach Anspruch 1, wobei das Verfahren in einem Videokonferenzendpunkt (100) ausgeführt wird.

6. Nichtflüchtiges computerlesbares Medium, das Anweisungen speichert, die, wenn sie durch einen Prozessor ausgeführt werden, den Prozessor veranlassen, ein Verfahren der Gesichtserkennung auszuführen, wobei das Verfahren umfasst:
Empfangen eines Bildes in einer ersten Auflösung;
Durchführen von Gesichtserkennung an dem Bild und Bereitstellen von Konfidenzwerten für die Gesichtserkennung von Kandidatengesichtern;
Bewerten der bereitgestellten Konfidenzwerte für die Gesichtserkennung anhand eines unteren Schwellenwerts und eines oberen Schwellenwerts;
Verwerfen von Kandidatengesichtern mit einem Konfidenzwert für die Gesichtserkennung unterhalb des unteren Schwellenwerts;
Akzeptieren von Kandidatengesichtern mit einem Konfidenzwert für die Gesichtserkennung oberhalb des oberen Schwellenwerts; und
**gekennzeichnet durch:**
Durchführen von Kopfidentifizierung an Kandidatengesichtern mit einem Konfidenzwert für die Gesichtserkennung oberhalb des unteren Schwellenwerts und unterhalb des oberen Schwellenwerts sowie Bereitstellen von Konfidenzwerten für die Kopfidentifizierung für jedes Kandidatengesicht;
wobei das Verfahren, wenn eine Kopfidentifizierung ausgeführt wird, ferner Auswerten der bereitgestellten Konfidenzwerte für die Kopfidentifizierung anhand eines dritten Schwellenwerts;
Verwerfen von Kandidatengesichtern mit einem Konfidenzwert für die Kopfidentifizierung unterhalb des dritten Schwellenwerts und
Akzeptieren von Kandidatengesichtern mit einem Konfidenzwert für die Kopfidentifizierung oberhalb des dritten Schwellenwerts umfasst.

7. Rechenvorrichtung, die umfasst:
einen Bildspeicher (107) zum Speichern eines Bildes in einer ersten Auflösung;
einen Prozessor, der mit dem Bildspeicher (107) gekoppelt ist;
einen nichtflüchtigen Speicher (104) zum Speichern von Programmanweisungen, die mit dem Prozessor gekoppelt sind, wobei die Anweisungen den Prozessor veranlassen, ein Verfahren zur Gesichtserkennung auszuführen, wobei das Verfahren umfasst:
Durchführen von Gesichtserkennung an einem gespeicherten Bild und Bereitstellen von Konfidenzwerten für die Gesichtserkennung von Kandidatengesichtern;
Bewerten der bereitgestellten Konfidenzwerte für die Gesichtserkennung anhand eines unteren Schwellenwerts und eines oberen Schwellenwerts;
Verwerfen von Kandidatengesichtern mit einem Konfidenzwert für die Gesichtserkennung unterhalb des unteren Schwellenwerts;
Akzeptieren von Kandidatengesichtern mit einem Konfidenzwert für die Gesichtserkennung oberhalb des oberen Schwellenwerts; und
**gekennzeichnet durch:**
Durchführen von Kopfidentifizierung an Kandidatengesichtern mit einem Konfidenzwert für die Gesichtserkennung oberhalb des unteren Schwellenwerts und unterhalb des oberen Schwellenwerts sowie Bereitstellen von Konfidenzwerten für die Kopfidentifizierung für jedes Kandidatengesicht;
wobei das Verfahren, wenn eine Kopfidentifizierung ausgeführt wird, ferner Auswerten der bereitgestellten Konfidenzwerte für die Kopfidentifizierung anhand eines dritten Schwellenwerts;
Verwerfen von Kandidatengesichtern mit einem Konfidenzwert für die Kopfidentifizierung unterhalb des dritten Schwellenwerts und
Akzeptieren von Kandidatengesichtern mit einem Konfidenzwert für die Kopfidentifizierung oberhalb des dritten Schwellenwerts umfasst.

8. Rechenvorrichtung nach Anspruch 7, wobei das Ausführen der Gesichtserkennung ferner Begrenzungsrahmen für jedes Kandidatengesicht bereitstellt, wobei das Verfahren ferner umfasst:
Vergrößern der Begrenzungsrahmen jedes Kandidatengesichts vor Ausführen der Kopfidentifizierung.

9. Rechenvorrichtung nach Anspruch 8, wobei das Verfahren ferner umfasst:
Bestimmen der Größe des Bildes in jedem vergrößerten Begrenzungsrahmen vor Ausführen der Kopfidentifizierung;
Vergleichen der Bildgröße in jedem vergrößerten Begrenzungsrahmen mit einer vorgegebenen Größe;
Zuschneiden des Bildes in dem vergrößerten Begrenzungsrahmen auf die vorgegebene Größe, wenn die Größe die vorgegebene Größe überschreitet; und
Bereitstellen des zugeschnittenen Bildes für die Durchführung der Kopfidentifizierung.

10. Rechenvorrichtung nach Anspruch 9, wobei der Speicher (107) zum Speichern eines Bildes in einer ersten Auflösung ferner zum Speichern des Bildes in einer zweiten, höheren Auflösung, wobei das Verfahren ferner umfasst:
Abtasten des Bildes in dem vergrößerten Begrenzungsrahmen von dem zweiten, höher auflösenden Bild, wenn die Bildgröße in dem vergrößerten Begrenzungsrahmen unterhalb der vorgegebenen Größe liegt; und
Bereitstellen des abgetasteten Bildes für die Durchführung der Kopfidentifizierung.

11. Rechenvorrichtung nach Anspruch 10, wobei die Rechenvorrichtung ein Videokonferenzendpunkt (100) ist, wobei die Rechenvorrichtung ferner umfasst:
eine Kamera (116), die mit dem Bildspeicher (107) gekoppelt ist, um das Bild in einer dritten Auflösung zu speichern, die höher als die zweite, höhere Auflösung ist, und
wobei das Verfahren ferner Folgendes umfasst:
Entwickeln der Bilder in der ersten und zweiten höheren Auflösung von dem in der dritten Auflösung gespeicherten Bild und Speichern der Bilder in der ersten und zweiten Auflösung im Bildspeicher (107).

12. Rechenvorrichtung nach Anspruch 10, wobei die Rechenvorrichtung ein Videokonferenzendpunkt (100) ist, wobei die Rechenvorrichtung ferner umfasst:
eine Kamera (116), die mit dem Bildspeicher (107) gekoppelt ist, um das Bild in einer dritten Auflösung zu speichern, die höher als die erste Auflösung ist, und
wobei das Verfahren ferner Folgendes umfasst:
Entwickeln der Bilder in der ersten Auflösung aus dem in der dritten Auflösung gespeicherten Bild und Speichern des Bildes in der ersten Auflösung im Bildspeicher (107).

## Revendications

1. Procédé de détection de visage comprenant :
la réception d'une image à une première résolution ;
la réalisation d'une détection de visage sur l'image et la fourniture de scores de confiance de détection de visage de visages candidats ;
l'évaluation des scores de confiance de détection de visage fournis par rapport à un seuil inférieur et un seuil supérieur ;
le rejet de visages candidats avec un score de confiance de détection de visage en dessous du seuil inférieur ;
l'acceptation de visages candidats avec un score de confiance de détection de visage au-dessus du seuil supérieur ; et **caractérisé par :**
la réalisation d'une identification de tête sur des visages candidats avec un score de confiance de détection de visage au-dessus du seuil inférieur et en dessous du seuil supérieur et la fourniture de scores de confiance d'identification de tête pour chaque visage candidat ;
dans lequel lorsque l'identification de tête est réalisée, le procédé comprend en outre l'évaluation des scores de confiance d'identification de tête fournis par rapport à un troisième seuil ;
le rejet de visages candidats avec un score de confiance d'identification de tête en dessous du troisième seuil ; et
l'acceptation de visages candidats avec un score de confiance d'identification de tête au-dessus du troisième seuil.

2. Procédé selon la revendication 1, dans lequel la réalisation de la détection de visage fournit en outre des boîtes englobantes pour chaque visage candidat, le procédé comprenant en outre :
l'agrandissement des boîtes englobantes de chaque visage candidat avant la réalisation d'une identification de tête.

3. Procédé selon la revendication 2, comprenant en outre :
la détermination de la taille de l'image dans chaque boîte englobante agrandie avant la réalisation d'une identification de tête ;
la comparaison de la taille de l'image dans chaque boîte englobante agrandie avec une taille prédéterminée ;
le recadrage de l'image dans la boîte englobante agrandie à la taille prédéterminée lorsque la taille dépasse la taille prédéterminée ; et
la fourniture de l'image recadrée pour une réalisation d'identification de tête.

4. Procédé selon la revendication 3, comprenant en outre:
la réception de l'image à une deuxième résolution supérieure ;
l'échantillonnage de l'image dans la boîte englobante agrandie à partir de l'image de deuxième résolution supérieure lorsque la taille d'image dans la boîte englobante agrandie est en dessous de la taille prédéterminée ; et
la fourniture de l'image échantillonnée pour une réalisation d'identification de tête.

5. Procédé selon la revendication 1, dans lequel le procédé est réalisé dans un point d'extrémité de vidéoconférence (100).

6. Support non transitoire lisible par ordinateur stockant des instructions qui lorsqu'elles sont exécutées par un processeur amènent le processeur à réaliser un procédé de détection de visage, le procédé comprenant :
la réception d'une image à une première résolution ;
la réalisation d'une détection de visage sur l'image et la fourniture de scores de confiance de détection de visage de visages candidats ;
l'évaluation des scores de confiance de détection de visage fournis par rapport à un seuil inférieur et un seuil supérieur ;
le rejet de visages candidats avec un score de confiance de détection de visage en dessous du seuil inférieur ;
l'acceptation de visages candidats avec un score de confiance de détection de visage au-dessus du seuil supérieur ; et **caractérisé par :**
la réalisation d'une identification de tête sur des visages candidats avec un score de confiance de détection de visage au-dessus du seuil inférieur et en dessous du seuil supérieur et la fourniture de scores de confiance d'identification de tête pour chaque visage candidat ;
dans lequel lorsque l'identification de tête est réalisée, le procédé comprend en outre l'évaluation des scores de confiance d'identification de tête fournis par rapport à un troisième seuil ;
le rejet de visages candidats avec un score de confiance d'identification de tête en dessous du troisième seuil ; et
l'acceptation de visages candidats avec un score de confiance d'identification de tête au-dessus du troisième seuil.

7. Dispositif informatique comprenant :
une mémoire d'image (107) pour le stockage d'une image à une première résolution ;
un processeur couplé à la mémoire d'image (107) ;
une mémoire non transitoire (104) pour le stockage d'instructions de programme couplée au processeur, les instructions amenant le processeur à réaliser un procédé de détection de visage, le procédé comprenant ;
la réalisation d'une détection de visage sur une image stockée et la fourniture de scores de confiance de détection de visage de visages candidats ;
l'évaluation des scores de confiance de détection de visage fournis par rapport à un seuil inférieur et un seuil supérieur ;
le rejet de visages candidats avec un score de confiance de détection de visage en dessous du seuil inférieur ;
l'acceptation de visages candidats avec un score de confiance de détection de visage au-dessus du seuil supérieur ; et **caractérisé par :**
la réalisation d'une identification de tête sur des visages candidats avec un score de confiance de détection de visage au-dessus du seuil inférieur et en dessous du seuil supérieur et la fourniture de scores de confiance d'identification de tête pour chaque visage candidat ;
dans lequel lorsque l'identification de tête est réalisée, le procédé comprend en outre l'évaluation des scores de confiance d'identification de tête fournis par rapport à un troisième seuil ;
le rejet de visages candidats avec un score de confiance d'identification de tête en dessous du troisième seuil ; et
l'acceptation de visages candidats avec un score de confiance d'identification de tête au-dessus du troisième seuil.

8. Dispositif informatique selon la revendication 7, dans lequel la réalisation de la détection de visage fournit en outre des boîtes englobantes pour chaque visage candidat, le procédé comprenant en outre :
l'agrandissement des boîtes englobantes de chaque visage candidat avant la réalisation d'une identification de tête.

9. Dispositif informatique selon la revendication 8, le procédé comprenant en outre :
la détermination de la taille de l'image dans chaque boîte englobante agrandie avant la réalisation d'une identification de tête ;
la comparaison de la taille de l'image dans chaque boîte englobante agrandie avec une taille prédéterminée ;
le recadrage de l'image dans la boîte englobante agrandie à la taille prédéterminée lorsque la taille dépasse la taille prédéterminée ; et
la fourniture de l'image recadrée pour une réalisation d'identification de tête.

10. Dispositif informatique selon la revendication 9, mémoire (107) pour le stockage d'une image à une première résolution en outre pour le stockage de l'image à une deuxième résolution supérieure, le procédé comprenant en outre :
l'échantillonnage de l'image dans la boîte englobante agrandie à partir de l'image de deuxième résolution supérieure lorsque la taille d'image dans la boîte englobante agrandie est en dessous de la taille prédéterminée ; et
la fourniture de l'image échantillonnée pour une réalisation d'identification de tête.

11. Dispositif informatique selon la revendication 10, dans lequel le dispositif informatique est un point d'extrémité de vidéoconférence (100), le dispositif informatique comprenant en outre :
une caméra (116) couplée à la mémoire d'image (107) pour le stockage de l'image à une troisième résolution supérieure à la deuxième résolution supérieure, et
dans lequel le procédé comprend en outre :
le développement des images aux première et deuxième résolutions supérieures à partir de l'image stockée à la troisième résolution et le stockage des images de première et deuxième résolutions dans la mémoire d'image (107).

12. Dispositif informatique selon la revendication 10, dans lequel le dispositif informatique est un point d'extrémité de vidéoconférence (100), le dispositif informatique comprenant en outre :
une caméra (116) couplée à la mémoire d'image (107) pour le stockage de l'image à une troisième résolution supérieure à la première résolution, et
dans lequel le procédé comprend en outre :
le développement des images à la première résolution à partir de l'image stockée à la troisième résolution et le stockage de l'image de première résolution dans la mémoire d'image (107).
